(19) Europäisches Patentamt / European Patent Office / Office européen des brevets

(11) **EP 4 628 980 A1**

(12) **EUROPEAN PATENT APPLICATION**
published in accordance with Art. 153(4) EPC

(43) Date of publication:
**08.10.2025 Bulletin 2025/41**

(21) Application number: **25716599.3**

(22) Date of filing: **08.01.2025**

(51) International Patent Classification (IPC):
*G02F 1/35* (2006.01)

(86) International application number:
**PCT/CN2025/071291**

(87) International publication number:
**WO 2025/175962 (28.08.2025 Gazette 2025/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.02.2024 CN 202410205079**

(71) Applicant: **Peking University**
**Beijing 100871 (CN)**

(72) Inventors:
• **LIU, Kaihui**
  **Beijing 100871 (CN)**
• **HONG, Hao**
  **Beijing 100871 (CN)**

• **MA, Chenjun**
  **Beijing 100871 (CN)**
• **HUANG, Chen**
  **Beijing 100871 (CN)**
• **MA, Chaojie**
  **Beijing 100871 (CN)**
• **YOU, Yilong**
  **Beijing 100871 (CN)**
• **WANG, Enge**
  **Beijing 100871 (CN)**
• **LU, Xiaobo**
  **Beijing 100871 (CN)**

(74) Representative: **Murgitroyd & Company**
**165-169 Scotland Street**
**Glasgow G5 8PL (GB)**

(54) **NONLINEAR OPTICAL CRYSTAL STRUCTURE AND PREPARATION METHOD THEREFOR, AND OPTICAL DEVICE**

(57) The present application relates to a nonlinear optical crystal structure, a preparation method thereof and an optical device. The nonlinear optical crystal structure includes a plurality of material layers stacked in a direction perpendicular to a two-dimensional plane thereof. Each of the material layers has a crystal structure with y-fold rotational symmetry, and has a predetermined lattice direction parallel to the two-dimensional plane, where y is an integer in a range from 1 to 20. Adjacent material layers have a nonzero twist angle therebetween, and the twist angle is an angle between the predetermined lattice directions of the adjacent material layers.

FIG. 1A

EP 4 628 980 A1

**Description**

This application claims priority to Chinese patent application No. 202410205079.5 entitled "NONLINEAR OPTICAL CRYSTAL STRUCTURE, PREPARATION METHOD THEREOF, AND OPTICAL DEVICE", and filed with the China National Intellectual Property Administration (CNIPA) on February 23, 2024, the content of which is hereby incorporated by reference in its entirety.

TECHNICAL FIELD

The present application relates to the technical field of optical crystals, and particularly to a nonlinear optical crystal structure, a preparation method thereof, and an optical device.

BACKGROUND

The research on nonlinear optics truly began in 1961 when Franken passed a laser with a wavelength of 694 nm through quartz crystal, and discovered the generation of second harmonic coherent emission at a wavelength of 347 nm. This was the first experiment involving second-harmonic generation in nonlinear optics. Thereafter, with the maturation of laser technology and the further establishment of nonlinear optical theory, the field of nonlinear optics has become a research hotspot.

Nonlinear optical crystals are the core of laser technologies such as optical frequency conversion, pulse compression, ultra-high power lasers, and supercontinuum laser generation, and have been widely used in laser communication, laser radar, and other fields. With the development of optical technology, exploring new optical crystal systems to meet the requirements of high-tech innovative technology is the key to developing advanced laser technologies and devices. Currently, mature nonlinear optical crystals include $BaB_2O_4$ (BBO), $KBeBOF_2$ (KBBF), $LiNbO_3$ (LN), etc.

When a fundamental wave with a single frequency is incident on a nonlinear medium, due to the coupling effect of the higher-order nonlinear susceptibilities, light wave radiation with a frequency of three times, four times or even higher times the fundamental frequency is generated. This nonlinear optical phenomenon is known as high harmonic generation. High harmonics are very important for the generation of extreme ultraviolet lasers and X-rays, which can be applied to extreme ultraviolet lithography machines and micro-nano processing technology for high-precision detection and resolution. In addition, the high harmonics can be used to generate shorter pulse lasers. It is generally believed that the generation of attosecond lasers enters the extreme ultraviolet bands, so the high harmonics are also crucial to the application of attosecond science.

A nonlinear metasurface technology is to realize high-order nonlinear phase modulation by designing nano-scale metal structures with multiple-fold rotational symmetry such as triangles and pentagons. By introducing the nonlinear phase modulated metasurface, the high harmonics at different positions exhibit different polarization and intensity modulation effects. However, the above-mentioned nonlinear metasurface fails to achieve phase matching and is very thin, only allowing limited modulation of the phase of the high harmonics, thus being unable to effectively enhance the high harmonics.

SUMMARY

In view of this, there is a need to provide a nonlinear optical crystal structure, a preparation method thereof, and an optical device, so as to realize the enhancement of high harmonics.

A first aspect of the present application provides a nonlinear optical crystal structure. The solution is as follows:

A nonlinear optical crystal structure includes a plurality of material layers stacked in a direction perpendicular to a two-dimensional plane thereof, wherein each of the material layers has a crystal structure with y-fold rotational symmetry, and has a predetermined lattice direction parallel to the two-dimensional plane, where y is an integer in a range from 1 to 20; adjacent material layers have a twist angle therebetween, the twist angle is not zero, and the twist angle is an angle between the predetermined lattice directions of the adjacent material layers.

In an embodiment, the quantity of the material layers is N, wherein the twist angle $\theta_m$ of an m-th material layer relative to a first material layer satisfies:

$$\frac{11}{20(p-1)}\Delta k\left(\sum_{n=1}^{m}t_n - \frac{1}{2}t_m - \frac{1}{2}t_1\right) \leq \theta_m \leq \frac{29}{20(p-1)}\Delta k\left(\sum_{n=1}^{m}t_n - \frac{1}{2}t_m - \frac{1}{2}t_1\right);$$

or

$$\frac{11}{20(p+1)}\Delta k\left(\sum_{n=1}^{m}t_n-\frac{1}{2}t_m-\frac{1}{2}t_1\right)\leq\theta_m\leq\frac{29}{20(p+1)}\Delta k\left(\sum_{n=1}^{m}t_n-\frac{1}{2}t_m-\frac{1}{2}t_1\right);$$

or

p is greater than y, and $p = 2b - 1 + ay$, where $1 \leq b < p$, b is an integer, a is an integer, $a \neq 0$, and

$$\frac{11}{20|p-2b+1|}\Delta k\left(\sum_{n=1}^{m}t_n-\frac{1}{2}t_m-\frac{1}{2}t_1\right)\leq\theta_m\leq\frac{29}{20|p-2b+1|}\Delta k\left(\sum_{n=1}^{m}t_n-\frac{1}{2}t_m-\frac{1}{2}t_1\right);$$

wherein the first material layer is any one of the material layers located on two outermost sides of the nonlinear optical crystal structure, the m-th material layer is adjacent to an (m-1)-th material layer, $t_n$ is a thickness of an n-th material layer, $t_m$ is a thickness of the m-th material layer, $t_1$ is a thickness of the first material layer, N, n, and m are all integers, $N\geq2$, $1\leq n\leq N$, $1<m\leq N$, $\Delta k$ is a wavevector mismatch of nonlinear optical effect of the material layer, $\Delta k = \frac{2p\pi}{\lambda}\left(n(p\omega)-n(\omega)\right)$, where $\omega$ is in a range from $9.4\times10^{13}$ rad/s to $9.4\times10^{15}$ rad/s, $\lambda$ is in a range from 200 nm to 20 $\mu$m, p is a harmonic order, and p is an integer in a range from 2 to 2000.

In an embodiment, the twist angle $\theta_m$ of the m-th material layer relative to the first material layer satisfies:

$$\theta_m = \frac{1}{(p-1)}\Delta k\left(\sum_{n=1}^{m}t_n-\frac{1}{2}t_m-\frac{1}{2}t_1\right),$$

or

$$\theta_m = \frac{1}{(p+1)}\Delta k\left(\sum_{n=1}^{m}t_n-\frac{1}{2}t_m-\frac{1}{2}t_1\right),$$

or

$$\theta_m = \frac{1}{|p-2b+1|}\Delta k\left(\sum_{n=1}^{m}t_n-\frac{1}{2}t_m-\frac{1}{2}t_1\right).$$

In an embodiment, thicknesses of the material layers are the same.

In an embodiment, each of the material layers has a thickness t, and the twist angle $\theta_m$ of the m-th material layer relative to the first material layer satisfies:

$$\frac{11(m-1)}{20(p-1)}\Delta k\cdot t\leq\theta_m\leq\frac{29(m-1)}{20(p-1)}\Delta k\cdot t,$$

or

$$\frac{11(m-1)}{20(p+1)}\Delta k\cdot t\leq\theta_m\leq\frac{29(m-1)}{20(p+1)}\Delta k\cdot t,$$

or

$$\frac{11(m-1)}{20|p-2b+1|}\Delta k\cdot t\leq\theta_m\leq\frac{29(m-1)}{20|p-2b+1|}\Delta k\cdot t.$$

In an embodiment, the twist angle $\theta_m$ of the m-th material layer relative to the first material layer satisfies:

$$\theta_m = \frac{(m-1)}{(p-1)}\Delta k\cdot t,$$

or

$$\theta_m = \frac{(m-1)}{(p+1)}\Delta k \cdot t,$$

or

$$\theta_m = \frac{(m-1)}{|p-2b+1|}\Delta k \cdot t.$$

In an embodiment, a twist direction of the m-th material layer relative to the (m-1)-th material layer is same in the material layers.

In an embodiment, each twist angle has a same degree.

In an embodiment, y of each of the material layers has a same value.

In an embodiment, each of the material layers has a thickness equal to or greater than 5 nm.

In an embodiment, the adjacent material layers are bonded by a van der Waals force.

In an embodiment, y is 1, and a material of the material layers is selected from the group consisting of silver molybdate, rhenium disulfide, KP15, and combinations thereof.

In an embodiment, y is 2, and a material of the material layers is selected from the group consisting of potassium dihydrogen phosphate, potassium titanyl phosphate, barium triborate, germanium arsenide, black phosphorus, germanium monoselenide, titanium trisulfide, and combinations thereof.

In an embodiment, y is 3, and a material of the material layers is selected from the group consisting of 3R-MoS$_2$, BBO, rhombohedral boron nitride, gallium selenide, KBBF, and combinations thereof.

In an embodiment, y is 4, and a material of the material layers is selected from the group consisting of perovskite, calcium chloride, sodium chloride, calcium fluoride, magnesium fluoride, and combinations thereof.

In an embodiment, y is 6, and a material of the material layers is selected from the group consisting of hexagonal boron nitride, graphene, and a combination thereof.

A second aspect of the present application provides a method for preparing a nonlinear optical crystal structure as described above. The solution is as follows:

A method for preparing the nonlinear optical crystal structure includes the following step:

twist-stacking the plurality of material layers according to the arrangement conditions of the twist angle.

A third aspect of the present application provides an optical device, which includes the nonlinear optical crystal structure as described in any one of the above embodiments.

Compared with conventional solutions, the above-mentioned nonlinear optical crystal structure, preparation method thereof, and optical device have the following beneficial effects:

The above-mentioned nonlinear optical crystal structure and preparation method thereof involves a stack of rotationally symmetric crystals, and achieve nonlinear enhancement of second-harmonic generation and even higher-order harmonic generation by controlling the twist angles between the material layers. The above-mentioned nonlinear optical crystal structure takes the advantages that the material layers have richer degrees of freedom (e.g., twist angles for stacking and types of stacking materials) and finer control means (atomic-level longitudinal stacking precision). Thus, the preparation process is refined, with higher control freedom and processing precision, making the crystal structure more sensitive to light modulation. Compared with conventional nonlinear metasurface solutions, the present solutions can achieve higher precision, higher operability, and higher efficiency.

The above optical device includes the nonlinear optical crystal structure as described in any one of the above embodiments, thus achieving the corresponding beneficial effects.

BRIEF DESCRIPTION OF THE DRAWINGS

FIG. 1A is a schematic structural view of a nonlinear optical crystal structure according to some embodiments of the present application.

FIG. 1B is a schematic view of twist angles between different two-dimensional material layers.

FIG. 2A is a schematic structural view of a nonlinear optical crystal structure according to some embodiments of the present application.

FIG. 2B is a graph showing simulation results of enhancement efficiency of second-harmonic generation (SHG) in a nonlinear optical crystal structure according to some embodiments of the present application.

FIGs. 3A and 3B are graphs showing simulation results of enhancement efficiency of second-harmonic generation (SHG) in a nonlinear optical crystal structure at different angles under corresponding twist-phase-matching conditions according to some embodiments of the present application.

FIG. 4 is a graph showing simulation results of enhancement efficiency of second-harmonic generation (SHG) in nonlinear optical crystal structures with different thicknesses of two-dimensional material layers under corresponding twist-phase-matching conditions according to some embodiments of the present application.

FIG. 5A is a schematic structural view of a nonlinear optical crystal structure according to some embodiments of the present application.

FIG. 5B is a graph showing thicknesses and interlayer twist angles of the nonlinear optical crystal structure shown in FIG. 5A.

FIG. 6A is a schematic structural view of second-harmonic generation polarization modulation through a nonlinear optical crystal structure according to some embodiments of the present application.

FIG. 6B is a graph showing results of a second-harmonic generation polarization experiment using a nonlinear optical crystal structure according to some embodiments of the present application.

FIG. 7 is a schematic view showing nonlinear optical crystal structures using crystals with different rotational symmetries as material layers achieving enhanced output of nonlinear lights.

FIG. 8A is a schematic structural view of a nonlinear optical crystal structure using crystals with 6-fold rotational symmetry as material layers according to some embodiments.

FIG. 8B is a graph showing dependence of fifth-harmonic intensity on the number of material layers when circularly polarized light is incident on the nonlinear optical crystal structure shown in FIG. 8A.

FIG. 9A is a schematic structural view of a nonlinear optical crystal structure using crystals with 4-fold rotational symmetry as material layers according to some embodiments.

FIG. 9B is a graph showing dependence of third harmonic intensity on the number of material layers when circularly polarized light is incident on the nonlinear optical crystal structure shown in FIG. 9A.

## DETAILED DESCRIPTION

The embodiments of the present application will be described in detail with reference to the accompanying drawings in order to make the objects, features, and advantages of the present application more apparent and understandable. Many specific details are disclosed in the following description to facilitate a comprehensive understanding of the present application. However, it should be noted that the present application can be implemented in various ways different from those described herein, and those skilled in the art may make similar improvements without departing from the scope of the present application. Therefore, the present application is not limited to the specific embodiments disclosed below.

Unless defined otherwise, all technical and scientific terms used herein have the same meaning as commonly understood by those skilled in the art of the present application. The terms used in the specification of the present application are for the purpose of describing exemplary examples only and are not intended to limit the present application. The term "and/or" used herein includes any and all combinations of one or more of the associated listed items.

In the description of the present application, the orientation or position relationships indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the present application and simplify the description only, rather than indicating or implying that the apparatus or element referred to must have a particular orientation or be constructed and operated in a particular orientation, and therefore are not to be interpreted as limiting the present application.

In addition, the terms "first" and "second" are used for descriptive purposes only, and cannot be construed as indicating or implying a relative importance, or implicitly specifying the number of the indicated technical features. Thus, the feature defined with "first" or "second" may explicitly or implicitly include one or more features. In the description of the present application, "a plurality of" means two or more, such as two or three, unless otherwise defined explicitly and specifically.

In nonlinear optics, the nonlinear response of a material is described by polarization. Under the action of optical field, an electric polarization in a medium can be described as:

$$P = \varepsilon_0 \left[ \chi^{(1)} E + \chi^{(2)} E^2 + \chi^{(3)} E^3 + \cdots \chi^{(n)} E^n \right],$$

where $\varepsilon_0 \chi^{(1)} E$ is a linear term, other perturbation terms are nonlinear terms, and $\chi^{(n)}$ is an n-th order nonlinear susceptibility. The microscopic mechanisms of generating nonlinear polarization mainly include electron cloud distortion, molecular rotation and vibration, and rearrangement of molecular orientation, etc.

Second-order nonlinear optical effects can only occur in crystals with central inversion asymmetry (central inversion symmetry breaking). A corresponding nonlinear coefficient tensor is $\chi^{(2)}$. A second-order polarization intensity can be represented as:

$$\boldsymbol{P}^{(2)} = \sum_{m,n} \varepsilon_0 \boldsymbol{\chi}^{(2)}(-\omega, \omega_m, \omega_n): \boldsymbol{E}(\omega_m)\boldsymbol{E}(\omega_n),$$

wherein the second-order nonlinear optical effects include second-harmonic generation, sum-frequency generation, and difference-frequency generation.

The second-harmonic generation refers to the generation of second harmonic with a frequency of $2\omega$ when incident light which is monochromatic light with a frequency of $\omega$, called fundamental frequency light, passes through a nonlinear medium (for example, a nonlinear optical crystal). Under the undepleted pump approximation and without considering walk-off effects, the intensity of the second-harmonic can be expressed as:

$$I_{2\omega} = \frac{2\omega^2}{c^3 n^2(\omega)n(2\omega)\varepsilon_0} d_{\text{eff}}^2 I_\omega^2 L^2 \frac{\sin^2(\varDelta kL/2)}{(\varDelta kL/2)^2},$$

where $I_{2\omega}$ and $I_\omega$ are intensities of the second harmonic and fundamental frequency light, respectively, L is a propagation distance of the fundamental frequency light in a nonlinear crystal, $d_{\text{eff}}$ is a second-order nonlinear coefficient, $\varDelta k$ is a wavevector mismatch,

$$\varDelta k = \frac{4\pi}{\lambda}\big(n(2\omega) - n(\omega)\big),$$

where $\lambda$ is a wavelength of the incident light. Generally, $\varDelta k \neq 0$, and therefore the phase mismatch effect may occur in conventional nonlinear crystals. When the phase mismatch occurs in the second-harmonic generation, the energies of the fundamental frequency light and the second harmonic reverse every coherence length $l_c\big(l_c = \frac{\pi}{\varDelta k} = \frac{\lambda}{4\big(n(2\omega)-n(\omega)\big)}\big)$, and thus the second-harmonic generation cannot be effectively enhanced. The coherence length $l_c$ refers to the characteristic distance over which nonlinear light can be enhanced in the crystal, wherein $l_c = \pi/\varDelta k$. The wavevector mismatch $\varDelta k$ is related to the wavelength of light and the type of optical crystal. In the following description, the coherence length $l_c$ and the wavevector mismatch $\varDelta k$ have the above meanings, which will not be described repeatedly.

High harmonic generation refers to the generation of harmonic light with a frequency that is three times, four times, or even higher times of the fundamental frequency when the fundamental wave with a single frequency is incident on a nonlinear medium, due to the coupling effect of the high nonlinear susceptibilities.

Similarly, when the phase mismatch occurs in the high harmonic generation, the energies of the fundamental frequency light and the harmonic light reverse every coherence length $l_c$, and thus the high harmonic generation cannot be effectively enhanced.

For p-th order harmonic generation, the wavevector mismatch is $\varDelta k = \frac{4\pi}{\lambda}\big(n(p\omega) - n(\omega)\big)$, $\lambda$ is the wavelength of incident light, and p is the harmonic order.

Unlike the second-harmonic generation and other even-order harmonic generations, odd-order harmonic generations such as third-harmonic generation and fifth-harmonic generation do not require central inversion symmetry breaking.

In order to overcome the above-mentioned problem of low output efficiency of harmonic light due to phase mismatch, quasi-phase matching can be adopted. For example, in the quasi-phase matching, periodically poled nonlinear optical crystals can be adopted to effectively enhance the harmonics.

Compared with birefringent phase matching, quasi-phase matching does not require specific polarization and angle conditions, while it can exploit the maximum effective nonlinear coefficient of the nonlinear crystals. Quasi-phase matching can achieve effective harmonic enhancement by only introducing a 180° phase compensation every coherence length. The period of the introduced polarization reversal can also be an odd multiple of the coherence length.

In nonlinear optics, the reciprocal lattice vector can be used to describe the phase mismatch compensated by the periodic structure, that is, $G_m = \frac{2\pi m}{\varLambda}$, where $\varLambda = 2l_c$, which is a length of one period. Constructing a suitable nonlinear crystal structure with periodic polarization reversal is key to achieve the quasi-phase matching. The conventional crystal materials used for quasi-phase matching generally include lithium niobate ($LiNbO_3$), etc. The periodically poled nonlinear optical crystals with specific ripple structures can be obtained by the Czochralski growth method or the electric field pattern poling method. Recently, laser pulse poling technology has also been developed. In the quasi-phase matching, the polarization direction of the medium is reversed every coherence length, allowing the intensity of the harmonics to be continuously enhanced. The quasi-phase matching can also be used to high-efficiency output of sum-frequency light and difference-frequency light.

However, the preparation of periodically poled crystals by using the quasi-phase matching method requires relatively complex equipment and complicated process, and the poled units can only be arranged in two opposite directions, thus limiting the functional applications of the conventional periodically poled nonlinear optical crystals.

The present application provides a nonlinear optical crystal structure capable of easily realizing high-efficiency output of second-harmonic and high harmonics, such as third harmonic, fourth harmonic, fifth harmonic, etc. High harmonic generations are very important for the generation of extreme ultraviolet lasers and X-rays, which can be applied in extreme ultraviolet lithography machines and micro-nano processing techniques for high-precision detection and resolution.

A nonlinear optical crystal structure of the present application includes a plurality of material layers. The plurality of material layers are stacked in a direction perpendicular to a two-dimensional plane thereof. Each of the material layers has a crystal structure with y-fold rotational symmetry, and has a predetermined lattice direction parallel to the two-dimensional plane, where y is an integer in a range from 1 to 20. Adjacent material layers have a nonzero twist angle therebetween. The twist angle is an angle between the predetermined lattice directions of the adjacent material layers.

The above-mentioned nonlinear optical crystal structure involves a stack of rotationally symmetric crystals, and achieve the nonlinear enhancement of second-harmonic generation and even higher-order harmonic generations by controlling the twist angles between the material layers. The above-mentioned nonlinear optical crystal structure takes the advantages that the material layers have richer degrees of freedom (e.g., twist angles for stacking and types of stacking materials) and finer control means (atomic-level longitudinal stacking precision), resulting in a more refined preparation process, with higher control freedom and processing precision, making the crystal structure more sensitive to light modulation. Compared with conventional nonlinear metasurface solutions, the present technical solution can achieve higher precision (on the nanometer scale), higher operability, and higher efficiency.

Some specific embodiments are provided below to describe the technical solution of the present application in more detail, so as to make the technical solution of the present application clearer.

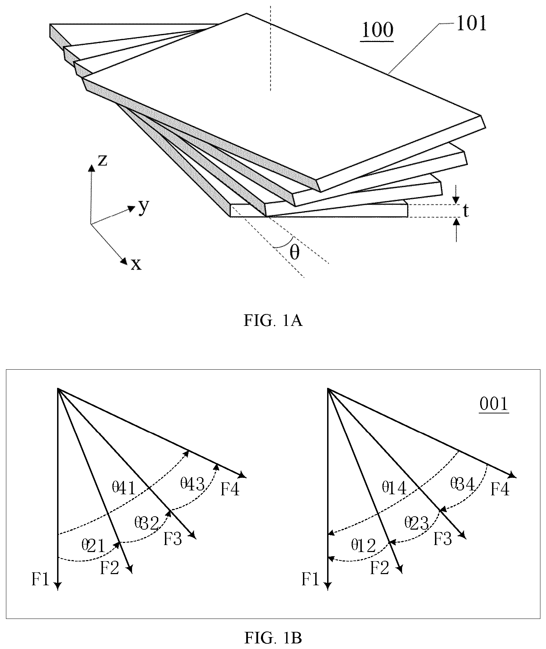

FIG. 1A is a schematic structural view of a nonlinear optical crystal structure according to some embodiments of the present application. A nonlinear optical crystal structure is shown in FIG. 1A. As shown in FIG. 1A, the nonlinear optical crystal structure 100 according to some embodiments of the present application includes a plurality of material layers 101. For example, each material layer 101 includes a two-dimensional plane extending in an x direction and a y direction, and the plurality of material layers 101 are stacked in a direction perpendicular to the two-dimensional plane thereof (z direction). Each material layer 101 has a crystal structure with y-fold rotational symmetry, and has a predetermined lattice direction parallel to the two-dimensional plane in a direction parallel to the two-dimensional plane of the material layer 101. Adjacent material layers 101 have a nonzero twist angle $\theta$ therebetween. The twist angle $\theta$ is an angle between the predetermined lattice directions of the adjacent material layers 101 in the same two-dimensional plane.

In the above-described nonlinear optical crystal structure, the number of material layers 101 is at least two, and can be two, three, four, or even more. In some embodiments, the nonlinear optical crystal structure includes two to one hundred material layers 101. The number of material layers 101 can be 2, 3, 4, 7, 10, 13, 15, 20, 25, 30, 35, 40, 50, 60, 70, 80, 90, 100, etc.

In the above-described nonlinear optical crystal structure, the adjacent material layers 101 have the nonzero twist angle therebetween, meaning that there is a certain twist angle between crystal structures of adjacent material layers in the plane. As described above, the twist angle is defined as the angle between the predetermined lattice directions of adjacent material layers 101 in the same two-dimensional plane. The predetermined lattice direction herein is not limited to a particular lattice direction of the crystal structure, but refers to a same lattice direction selected for different material layers, so that the twist angle between the crystal structures of different material layers in the plane can be determined by the angle between the predetermined lattice directions of different material layers. For example, the predetermined lattice directions of the different material layers 101 can be projected onto a plane parallel to the material layers, and the angle between the projections of the different predetermined lattice directions is the twist angle.

For example, for a rhombohedral boron nitride structure, the [0001] lattice direction of the crystal structure thereof can approximately coincide with the stacking direction z of the material layers, while the predetermined lattice direction in the two-dimensional plane can be any one of the in-plane lattice directions, such as [010], [120], and [1100], perpendicular to the stacking direction. Certainly, the lattice directions listed herein are exemplary. The twist angle between different material layers can be accurately obtained as long as the same lattice direction is selected for the stacked material layers to determine the twist angle. Therefore, this lattice direction is referred to herein as the predetermined lattice direction, the meaning of which can be understood by those skilled in the art. In addition, the rhombohedral boron nitride structure described above is also exemplary, and the embodiments of the present application are not limited to the above-described crystal structure, material, and lattice directions.

In some embodiments, adjacent material layers are bonded by a van der Waals force. In the nonlinear optical crystal structure described above, the material layers adjacent to each other are bonded by the van der Waals force, which is not limited to that the two surfaces are bonded to each other only through a van der Waals force therebetween, but they are bonded to each other mainly by a van der Waals force. Bonding by a van der Waals force not only facilitates the realization of the stacking process, but also does not affect the adjustment of the phase matching of nonlinear light, which can improve the output efficiency of nonlinear light.

In some embodiments, each material layer is a crystal with a central inversion asymmetric crystal structure. Here, the material layer having central inversion asymmetric (or central inversion symmetry breaking) crystal structure is the basis for realizing the second-harmonic generation and other even-order harmonic generations.

For example, the material layer itself can be formed by growing or stacking a plurality of sub-layers, and the crystal structures of the sub-layers in the material layer are the same and the orientations of the crystal structures are parallel to each other. The plurality of sub-layers include a first type sub-layer and a second type sub-layer. The chemical bonds formed between atoms at corresponding lattice positions in the first type sub-layer and the second type sub-layer are opposite in direction, and the number of the first type sub-layers is greater than the number of the second type sub-layers. Alternatively, the chemical bonds formed between atoms at corresponding lattice positions in the plurality of sub-layers are all in the same direction. As a result, the overall crystal structure of the material layer is a central inversion asymmetric crystal structure.

The "corresponding lattice positions" means that a lattice position in one sub-layer is shifted along the stacking direction of the sub-layers to another layer by an integer multiple of the lattice constant in this direction, or further shifted along a direction in the plane of the sub-layers by a distance less than the maximum size in the lattice plane, so as to obtain another lattice position, which is the corresponding lattice position of the original lattice position. For another example, for two vertex positions on one side of a hexagon, the two vertex positions on the side after being shifted are the corresponding positions of the original two vertex positions. For example, if a chemical bond is formed in a certain direction between a boron atom and a nitrogen atom distributed at two lattice positions in one sub-layer, and a chemical bond between a boron atom and a nitrogen atom distributed at two corresponding lattice positions in another sub-layer is oriented in an opposite direction, then the chemical bonds formed between atoms at corresponding lattice positions in the two sub-layers are in opposite directions. If a chemical bond is formed in a certain direction between a boron atom and a nitrogen atom distributed at two lattice positions in one sub-layer, and a chemical bond between a boron atom and a nitrogen atom distributed at two corresponding lattice positions in another sub-layer is also oriented in this direction, then the chemical bonds formed between atoms at the corresponding lattice positions in the two sub-layers are in the same direction.

It should be noted that the number of the first type sub-layers being greater than the number of the second type sub-layers can be that the number of the first type sub-layers accounts for more than 60% of the total number of the plurality of sub-layers, so that the material layer exhibits more significant nonlinear optical effect. For example, the above proportion can be greater than 70%, greater than 80%, or greater than 90%.

The above-described sub-layers can be atomic layers. The sub-layers can also be bonded to each other by van der Waals forces.

In some other embodiments, the material layers are not limited to being the crystals with the central inversion asymmetric crystal structures. Unlike the second-harmonic generation and other even-order harmonic generations, odd-order harmonic generations such as third-harmonic generation and fifth-harmonic generation do not require central inversion symmetry breaking. For odd-order harmonic generations, the material layers are not limited to being crystals with the central inversion asymmetric crystal structures.

In the nonlinear optical crystal structure of the present application, each material layer is of a crystal structure with y-fold rotational symmetry, where y is 1, 2, 3, 4, or 6.

In some embodiment, the material layers have the same value of y. In other words, each material layer in the nonlinear optical crystal structure is of a crystal structure with 1-fold rotational symmetry, 2-fold rotational symmetry, 3-fold rotational symmetry, 4-fold rotational symmetry, or 6-fold rotational symmetry.

When the material of the material layers is 1-fold rotationally symmetric crystal ($C_1$), that is, y is 1, the material of the material layers can specifically be but is not limit to at least one of silver molybdate, rhenium disulfide, and the two-dimensional material KP15.

When the material of the material layers is 2-fold rotationally symmetric crystal ($C_2$), that is, y is 2, the material of the material layers can specifically be but is not limited to at least one of potassium dihydrogen phosphate (KDP), potassium titanyl phosphate (KTP), barium triborate (LBO), germanium arsenide (GeAs), black phosphorus (B-P), germanium monoselenide (GeSe), and titanium trisulfide ($TiS_3$).

When the material of the material layers is 3-fold rotationally symmetric crystal ($C_3$), that is, y is 3, the material of the material layers can specifically be but is not limited to at least one of 3R-$MoS_2$, BBO, rhombohedral boron nitride, gallium selenide, and KBBF.

When the material of the material layers is 4-fold rotationally symmetric crystal ($C_4$), that is, y is 4, the material of the material layers can specifically be but is not limited to at least one of perovskite, calcium chloride, sodium chloride, calcium fluoride, and magnesium fluoride.

When the material of the material layers is 6-fold rotationally symmetric crystal ($C_6$), that is, y is 6, the material of the material layers can be but is not limited to hexagonal boron nitride, graphene, or a combination thereof.

When y is an integer of 5, 7 to 20, the material of the material layers can be quasicrystal.

In some embodiment, the values of y of the material layers are the same.

The specific materials listed above are merely exemplary, and the materials suitable for the material layers in the present application are not limited thereto.

In the nonlinear optical crystal structure described above, the specific materials of the material layers can be the same. However, the embodiments of the present application are not limited thereto, and at least two of the material layers can be made of different specific materials.

In some embodiments, the thickness t of each material layer 101 is greater than or equal to 5 nm. Further, the thickness t of each material layer 101 is greater than or equal to 7 nm. Further, the thickness t of each material layer 101 is greater than or equal to 9 nm. In some embodiments, the thickness t of the material layer 101 is in a range from 6 nm to 50 $\mu$m, specifically, for example, 6 nm, 10 nm, 30 nm, 50 nm, 60 nm, 80 nm, 300 nm, 500 nm, 800 nm, 1 $\mu$m, 5 $\mu$m, 10 $\mu$m, 20 $\mu$m, 30 $\mu$m, 50 $\mu$m, etc. In the nonlinear optical crystal structure formed by stacking two-dimensional crystal material layers as described above, in order to obtain higher output efficiency of nonlinear light, the twist angle and the thickness of each layer can be adjusted. When the thickness is very small, the twist angle will also be very small, and the range of angle that can enhance the nonlinear light output efficiency will also be very small, which result in great difficulty in the processing, and in the case of low processing precision, the nonlinear optical output efficiency may be reduced. It has been found by the inventors that when the thickness of each material layer is greater than or equal to 5 nm, stacking such material layers can balance high-efficiency output with process reliability and convenience.

It should be noted that the thicknesses of the material layers in the nonlinear optical crystal structure can be either the same or different.

It should be noted that although the light output efficiency can be greatly enhanced by adjusting the twist angle and the thickness of each layer, the wavevector mismatch of nonlinear light can be compensated to a certain extent, thus enhancing the output efficiency of nonlinear light to a certain extent, as long as the above-described twist-stacking has a nonzero twist angle.

In the above-described embodiment of FIG. 1A, the nonlinear optical crystal structure is shown as including four material layers. However, the number of material layers herein is merely exemplary. The number of material layers in the nonlinear optical crystal structure is not limited thereto, but can be more or less. For example, two, three, five, or more material layers can be included.

The above-described twist angle will be further described below in combination with FIG. 1B to make its meaning clearer. For example, the selected predetermined lattice directions F1, F2, F3, and F4 of the four material layers in FIG. 1A are projected onto the same plane 001 parallel to the material layers. As shown on the left side of FIG. 1B, F2 is twisted by $\theta 21$ counterclockwise with respect to F1, F3 is twisted by $\theta 32$ counterclockwise with respect to F2, F4 is twisted by $\theta 43$ counterclockwise with respect to F3, and F4 is twisted by $\theta 41$ counterclockwise with respect to F1. From another perspective, as shown on the right side of FIG. 1B, F1 is twisted by $\theta 12$ clockwise with respect to F2, F2 is twisted by $\theta 23$ clockwise with respect to F3, F3 is twisted by $\theta 34$ clockwise with respect to F4, and F1 is twisted by $\theta 14$ clockwise with respect to F4. For example, in combination with FIG. 1B, it can be seen that the second layer is twisted counterclockwise with respect to the first layer, the third layer is twisted counterclockwise with respect to the second layer, and the fourth layer is twisted counterclockwise with respect to the third layer. In this stacking method, the twist direction remains constant. This stacking method can be referred to as a continuous twist-stacking method. The twist angle is described in combination with the clockwise or counterclockwise direction, which is merely exemplary. It should be understood that since one direction can be twisted 360 degrees in a plane, and considering the rotational symmetry (e.g., 3-fold rotational symmetry) of the nonlinear optical crystal, the above limitations on the twist direction can be more meaningful within a relatively small angle range, e.g., the twist angle is in a range less than 60 degrees, but the embodiments of the present application are not limited thereto. Although better technical effects can be achieved by particular twist methods combined with adjusted twist angle ranges (which will be described in more detail in the following embodiments), some embodiments of the present application do not limit the twist direction between adjacent material layers.

For example, in the nonlinear optical crystal structure, the stacking direction of the material layers is parallel to a rotation axis of the crystal structure of the material layers. For example, for rhombohedral boron nitride, the stacking direction thereof can be parallel to the [0001] lattice direction.

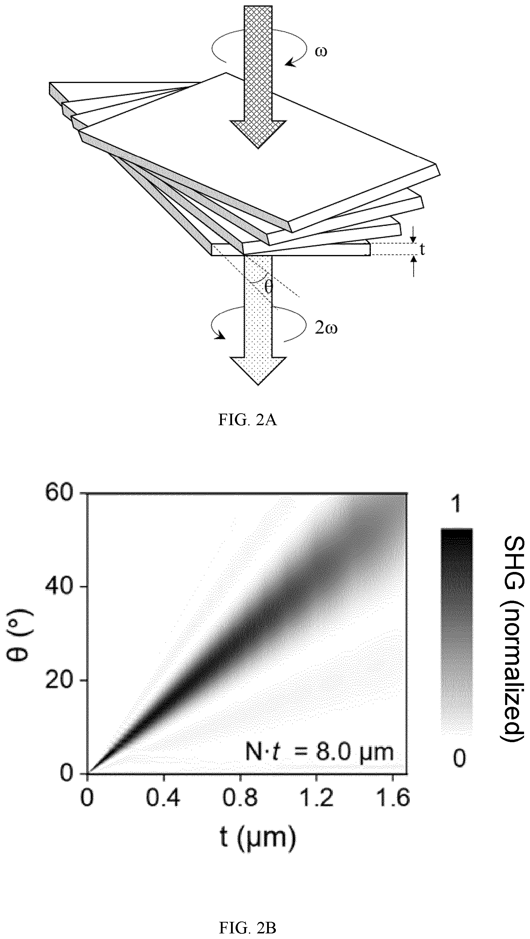

In some embodiments, as shown in FIG. 2A, the nonlinear optical crystal structure adopts a continuous twisting structure, and the thicknesses of the material layers are the same. For example, the quantity of the material layers is N, the thickness of each material layer is t, and thus the total thickness T of the nonlinear optical crystal structure is N·t. The twist angle of the m-th layer with respect to the first layer is $\theta_m = (m - 1)\theta$, where N is an integer greater than or equal to 2, m is a positive integer greater than or equal to 2 and less than or equal to N, and $\theta$ is equal to the twist angle of the second layer with respect to the first layer. It should be noted that the first material layer is any one of the material layers located on two outermost sides of the nonlinear optical crystal structure, and the m-th material layer is adjacent to an (m-1)-th material layer. The ordinal number of a material layer described here and in the following is sequentially counted from one side of the nonlinear optical crystal structure along the stacking direction of the material layers. For example, in FIG. 1B, the layers can be counted from bottom to top, respectively as the first material layer, the second material layer, the third material layer, and the fourth material layer. Certainly, the embodiments of the present application are not limited thereto. For example, in FIG. 1B, the counting can be done sequentially from top to bottom. In this embodiment, the thicknesses of the material layers are the same, and the twist angles between adjacent two layers are the same.

The inventors conducted research and experiments in order to obtain the influence of different twist angles $\theta$ and layer thickness t on the second-order nonlinear optical effects such as second-harmonic generation. The following describes the realization of the enhancement of second-harmonic generation using a nonlinear optical crystal structure as an example.

Firstly, a nonlinear optical crystal structure whose twist angle satisfies the condition for compensating the wavevector mismatch in the second-harmonic generation is selected. The total thickness T of the nonlinear optical crystal structure is kept constant (T is equal to the sum of the thicknesses of the N material layers used to construct the nonlinear optical crystal structure, for example, T=8 $\mu$m), and then the final enhancement intensity is obtained by simulating and calculating according to the nonlinear coupled-wave equations under the condition of continuous twist angles. FIG. 2B is a graph showing simulation results of enhancement efficiency of second-harmonic generation in the nonlinear optical crystal structure as described above. It can be seen from FIG. 2B that when $3\theta = \Delta k \cdot t$, the output efficiency of the second-harmonic generation is maximized. This corresponds to the condition of twist-phase matching enhancement. In addition, it can be seen that as the thickness t decreases, the enhancement efficiency of the second-harmonic generation increases.

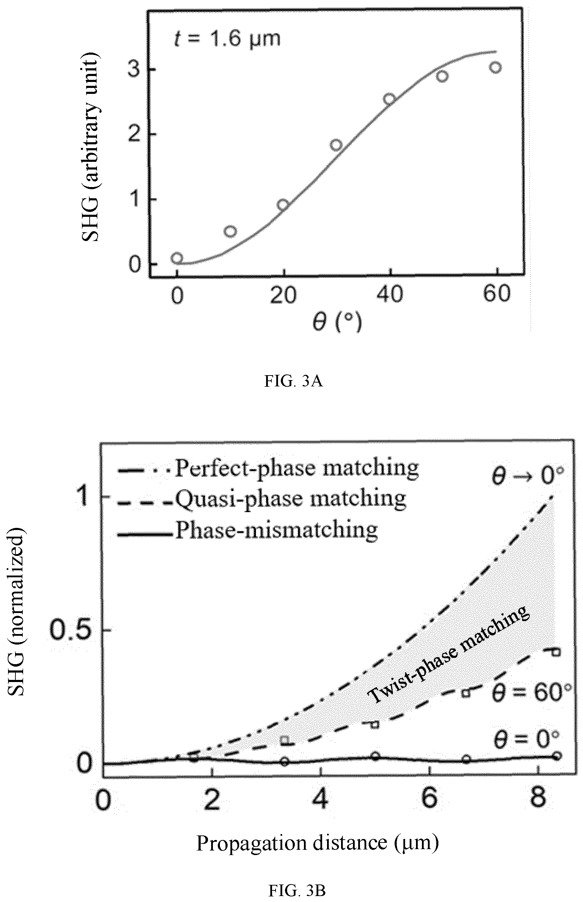

FIGs. 3A and 3B are graphs showing simulation results of enhancement efficiency of second-harmonic generation (SHG) in a nonlinear optical crystal structure at different angles under corresponding twist-phase matching conditions according to some embodiments of the present application. In the embodiment shown in FIG. 3A, two rhombohedral boron nitride (rBN) material layers, each with a thickness equal to the coherence length lc, are used. The dependence of the second-harmonic intensity on the twist angle is obtained by adjusting the twist angle between the two material layers. As shown in FIG. 3A, for rBN with a thickness equal to the coherence length lc, when the twist angle is 60 degrees, the conversion efficiency of the second-harmonic generation is the highest, which corresponds to the quasi-phase matching. FIG. 3B is for a rBN continuous twisting structure formed by five material layers with a twist angle not equal to 60 degrees. In this embodiment, the twist angle is changed with the thickness of the material layer, and the enhancement efficiency of second-harmonic generation is simulated. By solving the nonlinear coupled-wave equations, the final output intensity of the second harmonic is obtained, which lies between that of perfect-phase matching and that of quasi-phase matching (i.e., the gray part in FIG. 3B). This method can be referred to as twist-phase matching. When the thickness t and the twist angle both approach 0, the twist-phase matching approaches the perfect-phase matching. Further, based on calculations, the curve of the conversion efficiency of second-harmonic generation versus the thickness t under the twist-phase matching condition is obtained. The conversion efficiency is twice that of the quasi-phase matching at a twist angle of 30 degrees, thus effectively enhancing the second-harmonic generation.

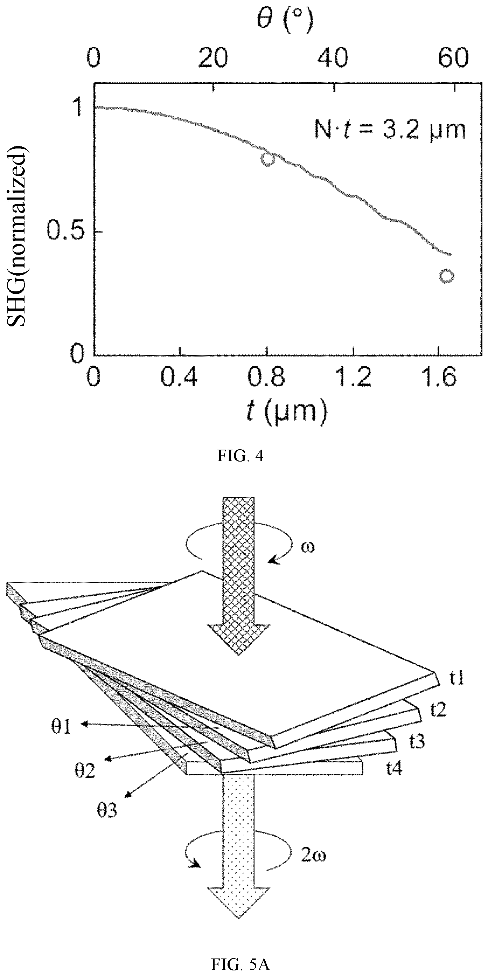

FIG. 4 is a graph showing simulation results of enhancement efficiency of second-harmonic generation (SHG) in nonlinear optical crystal structures with different thicknesses of two-dimensional material layers under a corresponding twist-phase matching condition according to some embodiments of the present application. In the embodiment shown in FIG. 4, the total thickness T is adjusted to be 3.2 $\mu$m, and the relationship between the output efficiency of two-dimensional nonlinear light, the thickness t of the material layers, and the twist angle $\theta$ between adjacent material layers is obtained. It can also be seen from FIG. 4 that as the thickness of each material layer decreases, a higher enhancement efficiency of second-harmonic generation can be obtained.

It can be seen from the simulation results of FIGs. 2B, 3A, 3B and 4 that when the thickness of the material layer gradually decreases and the twist angle changes accordingly, the conversion efficiency of the second harmonic can gradually increase, and the conversion efficiency lies between the conversion efficiency achieved by quasi-phase matching and the conversion efficiency achieved by perfect-phase matching. However, under the same thickness condition, the range of twist angle $\theta$ for achieving the twist-phase matching enhancement decreases gradually as the thickness of the material layer decreases (for example, referring to the width of the black part in FIG. 2B). As described above, the inventors found that as the thickness of the material layer decreases, the twist-phase matching enhancement requires increasingly stringent precision on the twist angle. This can affect both preparation and performance. First, when the thickness is very small, the range of twist angle that can be adjusted accordingly is also very small, which imposes high requirements on the precision of material layer thickness control and the precision of twist angle control during stacking the material layers. Second, due to the stringent requirements on precision, the errors occurred in preparation in turn adversely affect the nonlinear light output efficiency of the prepared nonlinear optical crystal structure. The inventors have found through experiments that sufficient enhancement of output efficiency of second-order nonlinear light can be achieved when the thickness of each stacked material layer is equal to or greater than 5 nm.

For example, the continuous twisting structure of the nonlinear optical crystal structure can achieve twist-phase matching under circularly polarized light excitation. With the continuous twisting structure, when $3\theta=\Delta k \cdot t$, the efficiency of second-harmonic generation excited by circularly polarized light is four times that excited by linearly polarized light. The smaller the twist angle, the smaller the corresponding layer thickness, and the higher the conversion efficiency of the second harmonic, the sum frequency or the difference frequency. Theoretically, perfect-phase matching conditions can be achieved under continuous twist-angle conditions, with an efficiency of $\pi^2/4$ times that of quasi-phase matching.

In the above embodiments, each material layer has a same thickness t. In some other embodiments, each material layer in the nonlinear optical crystal structure can has a different thickness t.

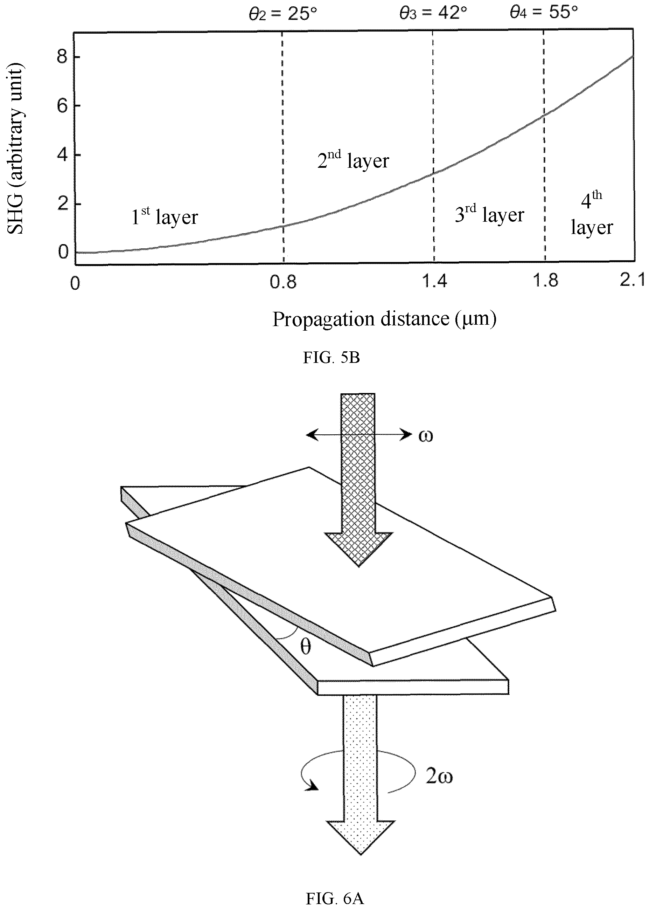

FIG. 5A is a schematic structural view of a nonlinear optical crystal structure according to some embodiments of the present application. FIG. 5B is a graph showing thicknesses and interlayer twist angles of the nonlinear optical crystal structure shown in FIG. 5A. As shown in FIG. 5A, the nonlinear optical crystal structure is also a continuous twisting structure. From top to bottom in FIG. 5A, the thicknesses of the first to fourth material layers are t1, t2, t3, and t4, respectively. As shown in FIG. 5B, the thickness t1 of the first material layer is 0.8 μm, the thickness t2 of the second material layer is 0.6 μm, the thickness t3 of the third material layer is 0.4 μm, and the thickness t4 of the fourth material layer is 0.3 μm. Therefore, when light is incident on the first material layer, its propagation distances to the surfaces of the first, second, third, and fourth material layers away from the light incident side are 0.8 μm, 1.4 μm, 1.8 μm, and 2.1 μm, respectively. The twist angle θ1 between the first material layer and the second material layer is 25°, the twist angle θ2 between the second material layer and the third material layer is 42°, and the twist angle θ3 between the third material layer and the fourth material layer is 55°. In this embodiment, by adjusting the twist angles between material layers of different thicknesses, high output efficiency of second-order nonlinear light can also be achieved, which is between quasi-phase matching and perfect-phase matching, thereby enhancing the second harmonic output efficiency.

As can be seen from FIGs. 5A and 5B, in the embodiments where material layers of different thicknesses are stacked, by adjusting the twist angles between adjacent material layers according to the thicknesses of the material layers, the output efficiency of the second harmonic can be enhanced. The inventors found through experiments that when the nonlinear optical crystal structure has a continuous twisting structure formed by stacking N material layers, the twist angle $\theta_m$ of the m-th layer relative to the first layer satisfies: $\theta_m = 1/3\Delta k \left(\sum_{n=1}^{m} t_n - \frac{1}{2}t_m - \frac{1}{2}t_1\right)$, which can enhance the output efficiency of second-order nonlinear light and realize twist-phase matching. In this case, the output efficiency of second-order nonlinear light lies between that achieved by quasi-phase matching and that achieved by perfect-phase matching. Here, t1 is the thickness of the first material layer, N, n, and m are all integers, N≥2, 1≤n≤N, 1<m≤N.

As can be seen from the results shown in FIGs. 5A and 5B, compared with the stringent requirements of quasi-phase matching on layer thickness t, any layer thickness $t_m$ here can find one or more corresponding $\theta_m$ to achieve twist-phase matching, and the resulted efficiency of second-harmonic generation is higher than that achieved by quasi-phase matching.

In the embodiments where each material layer has the same thickness, the relationship between the thickness t of each material layer and the twist angle θ between adjacent material layers is $\theta=1/3\Delta k \cdot t$. In the embodiments where each material layer has a different thickness, the relationship between the thickness t of the material layer and the twist angle $\theta_m$ between adjacent material layers is $\theta_m = 1/3\Delta k \left(\sum_{n=1}^{m} t_n - \frac{1}{2}t_m - \frac{1}{2}t_1\right)$. However, for example, as shown in FIG. 2B, when the thicknesses of the material layers are equal to or greater than 5 nm, the nonlinear optical crystal structure formed by stacking the material layers has higher "tolerance" to the twist angles, that is, the twist-phase matching can be realized within a certain twist angle range, while enhancing the output efficiency of nonlinear light. The inventors found that when the relationship between the thickness t of the material layer and the twist angle $\theta_m$ between adjacent material layers meets $\frac{11}{20(p\mp1)}\Delta k(\sum_{n=1}^{m} t_n - \frac{1}{2}t_m - \frac{1}{2}t_1) \leq \theta_m \leq \frac{29}{20(p\mp1)}\Delta k(\sum_{n=1}^{m} t_n - \frac{1}{2}t_m - \frac{1}{2}t_1)$, the output efficiency of the nonlinear light can be effectively enhanced, where p is the harmonic order, that is, an integer greater than or equal to 2. For example, p is an integer ranging from 2 to 2000, and specifically, such as, 2, 3, 4, 5, 6, 7, 8, 9, 10, 20, 50, 100, etc. It should be noted that the relationship expressed by $\frac{11}{20(p\mp1)}\Delta k(\sum_{n=1}^{m} t_n - \frac{1}{2}t_m - \frac{1}{2}t_1) \leq \theta_m \leq \frac{29}{20(p\mp1)}\Delta k(\sum_{n=1}^{m} t_n - \frac{1}{2}t_m - \frac{1}{2}t_1)$ can also be applied to the case where the thicknesses of the material layers are the same. If $t_n$, $t_m$, and $t_1$ are all set to be the same value, $\frac{11(m-1)}{20(p\mp1)}\Delta k \cdot t \leq \theta_m \leq \frac{29(m-1)}{20(p\mp1)}\Delta k \cdot t$ can be obtained. Further, the relationship between the thickness t of the material layer and the twist angle $\theta_m$ between adjacent material layers can be $\frac{4(m-1)}{5(p\mp1)}\Delta k \cdot t \leq \theta_m \leq \frac{6(m-1)}{5(p\mp1)}\Delta k \cdot t$.

When the handedness of output polarized light is the same as that of incident polarized light, "$\mp$" takes "-", for example,

$$\frac{11}{20(p-1)}\Delta k(\sum_{n=1}^{m} t_n - \frac{1}{2}t_m - \frac{1}{2}t_1) \leq \theta_m \leq \frac{29}{20(p-1)}\Delta k(\sum_{n=1}^{m} t_n - \frac{1}{2}t_m - \frac{1}{2}t_1)$$ , or for example,

$\frac{4(m-1)}{5(p-1)}\Delta k \cdot t \leq \theta_m \leq \frac{6(m-1)}{5(p-1)}\Delta k \cdot t$. When the handedness of output polarized light is opposite to that of incident polarized light, "$\mp$" takes "-", for example,

$$\frac{11}{20(p+1)}\Delta k(\sum_{n=1}^{m} t_n - \frac{1}{2}t_m - \frac{1}{2}t_1) \leq \theta_m \leq \frac{29}{20(p+1)}\Delta k(\sum_{n=1}^{m} t_n - \frac{1}{2}t_m - \frac{1}{2}t_1)$$ , or for example,

$\frac{4(m-1)}{5(p+1)}\Delta k \cdot t \leq \theta_m \leq \frac{6(m-1)}{5(p+1)}\Delta k \cdot t$. Further, when the twist angle $\theta_m$ of the m-th material layer with respect to the first material layer satisfies: $\theta_m = \frac{(m-1)}{(p\mp1)}\Delta k \cdot t$, the output efficiency of nonlinear light is the highest.

When the incident light is elliptically polarized light or linearly polarized light, p (harmonic order) is greater than y, and $p = 2b - 1 + ay$, where $1 \leq b < p$, b is an integer, a is an integer, $a \neq 0$, and the relationship between the thickness t of the material layer and the twist angle $\theta_m$ between adjacent material layers is

$$\frac{11}{20|p-2b+1|}\Delta k\left(\sum_{n=1}^{m} t_n - \frac{1}{2}t_m - \frac{1}{2}t_1\right) \leq \theta_m \leq \frac{29}{20|p-2b+1|}\Delta k\left(\sum_{n=1}^{m} t_n - \frac{1}{2}t_m - \frac{1}{2}t_1\right)$$ . In this case, the output efficiency of nonlinear light can be effectively enhanced. When the thicknesses of the material layers are the same, $t_n$, $t_m$, and $t_1$ are all set to be the same value, and $\frac{11(m-1)}{20|p-2b+1|}\Delta k \cdot t \leq \theta_m \leq \frac{29(m-1)}{20|p-2b+1|}\Delta k \cdot t$ can be obtained.

Further, when the twist angle $\theta_m$ of the m-th material layer with respect to the first material layer satisfies: $\theta_m = \frac{(m-1)}{|p-2b+1|}\Delta k \cdot t$, the output efficiency of the nonlinear light is the highest.

In some embodiments, each material layer has a crystal structure with 3-fold rotational symmetry. In these embodiments, when the thickness t of each material layer is equal to lc and the interlayer twist angle is equal to 60 degrees, the achieved enhancement effect of the output efficiency of the second-order nonlinear light can be equivalent to that achieved by quasi-phase matching. Further, when each material layer has a crystal structure with 3-fold rotational symmetry, the thickness of each material layer is less than lc and the interlayer twist angle is less than 60 degrees, by adjusting the thickness t of the material layer and the interlayer twist angle θ to conform to the above-described relationship between the thickness t of the material layer and the twist angle between adjacent material layers, the achieved output efficiency of second-order nonlinear light can lie between that achieved by quasi-phase matching and that achieved by perfect-phase matching.

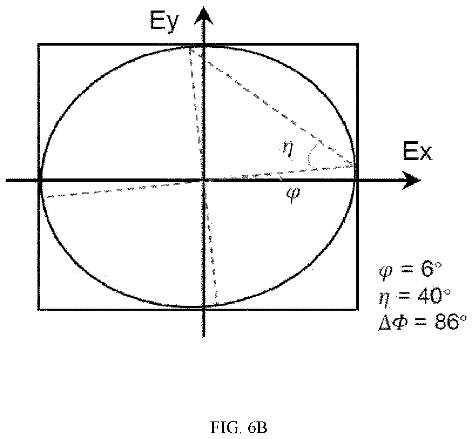

FIGs. 6A and 6B illustrate some other embodiments of the present application, outputting nonlinear light under a specific polarization condition by setting the total thickness of the nonlinear optical crystal structure based on the above embodiments. As shown in FIG. 6A, under the condition of setting the continuous twist angle θ as described above, the total thickness T of the nonlinear optical crystal structure is further set to be T=c·t=n·lc, where c and n are positive integers, and lc is the coherence length. If 3θ=+Δk·t is satisfied, the output second harmonic is right-handed circularly polarized light. If 3θ=-Δk·t is satisfied, the output second-harmonic is left-handed circularly polarized light. FIG. 6A is a schematic view showing input light, output light, and the nonlinear optical crystal structure, and FIG. 6B shows the experiment result of this embodiment. In FIG. 6B, the phase difference $\Delta\Phi$ between Ex and Ey is 86°, and the ellipticity $\eta$ is 40°. As can be seen from FIG. 6B, by stacking two material layers, while maintaining the twist angle to satisfy 3θ=+Δk·t or 3θ=-Δk·t, circularly polarized second-harmonic can be output by passing linearly polarized light through the nonlinear optical crystal structure (the experiment result in FIG. 6B indicating elliptical polarization close to circular polarization). In addition, by controlling the twist direction of adjacent material layers, the polarization direction of the circularly polarized light can be further controlled.

It should be noted that, in the embodiments referring to FIGs. 6A and 6B, the signs "+" and "-" in 3θ=+Δk·t and 3θ=-Δk·t indicate the twist direction. The positive twist angle and the negative twist angle are opposite to each other. For example, the positive twist angle indicates twist in the counterclockwise direction, and the negative twist angle indicates twist in the clockwise direction. Alternatively, the positive twist angle indicates twist in the clockwise direction, and the negative twist angle indicates twist in the counterclockwise direction. Thus, as an example, the continuous twisting structure means that the twist angles thereof are all positive or all negative. However, it should be noted that, for convenience of description, in the case where the twist direction is specified (for example, the twist direction is the same) or not specified, the angle value or angle range without "+" and "-" signs can be regarded as the absolute value of the twist angle or the absolute value range of the twist angle. Accordingly, the twist direction between adjacent material layers can be changed according to needs or in combination with other conditions. Therefore, the above-described conditions for the nonlinear optical crystal structure to convert linear polarized light into circular polarized light in a specific direction can also be written as the total thickness T of the nonlinear optical crystal structure being $T=c \cdot t=n \cdot lc$ and $3\theta=\Delta k \cdot t$. Depending on the direction of circular polarization to be achieved, the twist direction of the material layers or from which side of the nonlinear optical crystal structure the incident light is incident can then be determined.

In the embodiments shown in FIGs. 6A and 6B, the thickness t of each material layer is the same, but the structure which can realize the conversion from linearly polarized light to circularly polarized light is not limited to the structure with the same thickness t. In some embodiments, at least two of the material layers have different thicknesses, and the effect of converting linearly polarized light into circularly polarized light can also be achieved under the following conditions:

the twist angle $\theta_m$ satisfies: $\theta_m = 1/3\Delta k \left( \sum_{n=1}^{m} t_n - \frac{1}{2} t_m - \frac{1}{2} t_1 \right)$, and the thickness of the material layer satisfies: $\sum_{q=1}^{N} \exp(-2i\Delta k \sum_{n=1}^{q-1} t_n)[exp(-i\Delta k \frac{3}{2} t_q) - exp(-i\Delta k \frac{1}{2} t_q)]=0$,

where q is an integer greater than or equal to 1 and less than or equal to N, and $t_q$ is a thickness of a q-th material layer.

In the embodiments as described above, the thickness of each material layer can be less than the coherence length lc. However, the nonlinear optical crystal structure as described above is not limit thereto. The thickness of at least one of the material layers included in the nonlinear optical crystal structure can be greater than the coherence length. In this case, by satisfying the relationship between the thickness of the material layer and the twist angle between the adjacent material layers as described above, the nonlinear light output efficiency can be enhanced by the nonlinear optical crystal structure.

In some embodiments, the coherence length lc of the crystal material of the material layer is greater than 0 and less than or equal to 1 mm. In some embodiments, the coherence length can range from 10 nm to 100 $\mu$m.

As some examples, the wavevector mismatch of the second-order nonlinear optical effect of the two-dimensional material used for constructing the nonlinear optical crystal structure is $\Delta k$, where $\Delta k=k3-k2-k1$, i.e., the wavevector difference between the output light and the incident light. The layer thickness or polarization period of the structure of the above optical crystal when achieving the quasi-phase matching to enhance the second-order nonlinear optical effects can be calculated by $t=m1 \times lc=m1 \times \pi/\Delta k$, where m1 is an odd number, lc is the coherence length. The coherence length is the characteristic distance over which nonlinear light can be enhanced, $lc=\pi/\Delta k$. Each layer is stacked at a specific twist angle, which can achieve quasi-phase matching, thus effectively enhancing second-harmonic generation. The twist angle allows the polarization direction to reverse. If the crystal has n-fold rotational symmetry, the twist angle of the periodic structure is $180°/n \times m2$ to realize the quasi-phase matching, and m2 is an odd number.

In some embodiments, the periodic structure further includes a plurality of periods and quasi-periods.

In some embodiments, the thickness of each material layer is substantially equal to the coherence length lc, and the twist angle between adjacent material layers is in a range from 51 degrees to 69 degrees. Under these conditions, the output efficiency of nonlinear light can also be enhanced, which reach that achieved by the quasi-phase matching.

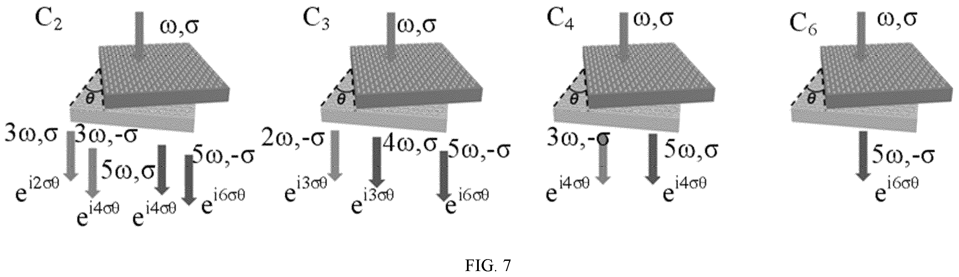

Referring to FIG. 7 and Table 1, for the above nonlinear optical crystal structure, different geometric phases can be introduced when the material layers are made of the materials with different symmetries, such as 1-fold rotation symmetric crystal $C_1$, 2-fold rotation symmetric crystal $C_2$, 3-fold rotation symmetric crystal $C_3$, 4-fold rotation symmetric crystal $C_4$ or 6-fold rotation symmetric crystal $C_6$. Furthermore, when circularly polarized light is incident, the different handedness of the circularly polarized light also renders different geometric phases. For the p-th harmonic generation, the geometric phase introduced in output circularly polarized light with the same handedness is $(p-1)\theta$, and the geometric phase introduced in output circularly polarized light with the opposite handedness is $(p+1)\theta$, where p is the harmonic order. In FIG. 7 and Table 1, "+" represents the same handedness, and "-" represents the opposite handedness.

Table 1

| Harmonic order | Rotation (sign of $\sigma$) | 1-fold rotation symmetric crystal $C_1$ | 2-fold rotation symmetric crystal $C_2$ | 3-fold rotation symmetric crystal $C_3$ | 4-fold rotation symmetric crystal $C_4$ | 6-fold rotation symmetric crystal $C_6$ |
|---|---|---|---|---|---|---|
| n=1 | + | / | / | / | / | / |
| | - | $2\theta\sigma$ | $2\theta\sigma$ | / | / | / |

(continued)

| Harmonic order | Rotation (sign of $\sigma$) | 1-fold rotation symmetric crystal $C_1$ | 2-fold rotation symmetric crystal $C_2$ | 3-fold rotation symmetric crystal $C_3$ | 4-fold rotation symmetric crystal $C_4$ | 6-fold rotation symmetric crystal $C_6$ |
|---|---|---|---|---|---|---|
| n=2 | + | $\theta\sigma$ | / | / | / | / |
|  | - | $3\theta\sigma$ | / | $3\theta\sigma$ | / | / |
| n=3 | + | $2\theta\sigma$ | $2\theta\sigma$ | / | / | / |
|  | - | $4\theta\sigma$ | $4\theta\sigma$ | / | $4\theta\sigma$ | / |
| n=4 | + | $3\theta\sigma$ | / | $3\theta\sigma$ | / | / |
|  | - | $5\theta\sigma$ | / | / | / | / |
| n=5 | + | $4\theta\sigma$ | $4\theta\sigma$ | / | $4\theta\sigma$ | / |
|  | - | $6\theta\sigma$ | $6\theta\sigma$ | $6\theta\sigma$ | / | $6\theta\sigma$ |

For example, as shown in (a) of FIG. 7, when circularly polarized light with a frequency of $\omega$ is incident on a nonlinear optical crystal structure with 2-fold rotation symmetric crystal $C_2$ material layers, under the condition that the twist angle $\theta$ satisfies the twist-phase matching, the output lights include same-handedness circularly polarized light with a frequency of $3\omega$ and a geometric phase of $2\theta$, opposite-handedness circularly polarized light with a frequency of $3\omega$ and a geometric phase of $4\theta$, same-handedness circularly polarized light with a frequency of $5\omega$ and a geometric phase of $4\theta$, and opposite-handedness circularly polarized light with a frequency of $5\omega$ and a geometric phase of $6\theta$.

For example, as shown in (b) of FIG. 7, when circularly polarized light with a frequency of $\omega$ is incident on a nonlinear optical crystal structure with 3-fold rotation symmetric crystal $C_3$ material layers, under the condition that the twist angle $\theta$ satisfies the twist-phase matching, the output lights include opposite-handedness circularly polarized light with a frequency of $2\omega$ and a geometric phase of $3\theta$, same-handedness circularly polarized light with a frequency of $4\omega$ and a geometric phase of $3\theta$, opposite-handedness circularly polarized light with a frequency of $5\omega$ and a geometric phase of $6\theta$.

For example, as shown in (c) of FIG. 7, when circularly polarized light with a frequency of $\omega$ is incident on a nonlinear optical crystal structure with 4-fold rotation symmetric crystal $C_4$ material layers, under the condition that the twist angle $\theta$ satisfies the twist-phase matching, the output lights include opposite-handedness circularly polarized light with a frequency of $3\omega$ and a geometric phase of $4\theta$ and same-handedness circularly polarized light with a frequency of $5\omega$ and a geometric phase of $4\theta$.

For example, as shown in (d) of FIG. 7, when circularly polarized light with a frequency of $\omega$ is incident on a nonlinear optical crystal structure with 6-fold rotation symmetric crystal $C_6$ material layers, under the condition that the twist angle $\theta$ satisfies the twist-phase matching, the output light is opposite-handedness circularly polarized light with a frequency of $5\omega$ and a geometric phase of $6\theta$.

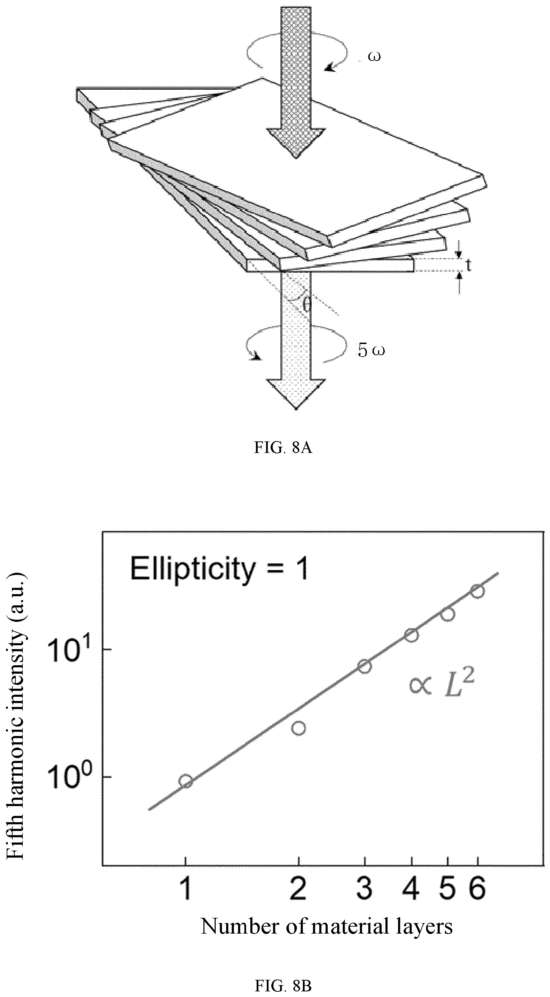

FIG. 8A shows a nonlinear optical crystal structure capable of realizing fifth-harmonic phase matching according to some embodiments, which has a continuous twist-stacking structure, where each material layer has the same thickness t, and the twist angle $\theta$ between adjacent layers is the same, which is $\frac{1}{6}\Delta k \cdot t$. In this embodiment, each material layer is made of hexagonal boron nitride (h-BN), which is a 6-fold rotation symmetric material. According to Table 1, the handedness of the output circularly polarized light is opposite to that of the incident circularly polarized light, and the introduced geometric phase is $6\theta$.

FIG. 8B shows the dependence of the fifth-harmonic intensity on the number of material layers when left-handed and right-handed circularly polarized lights are incident on the nonlinear optical crystal structure in the embodiment shown in FIG. 8A. It can be seen from FIG. 2B that under left-handed circularly polarized light excitation, as the number of material layers increases, the fifth-harmonic intensity increases approximately quadratically, achieving fifth-harmonic phase matching, with a conversion efficiency of $1.5\times10^{-5}$.

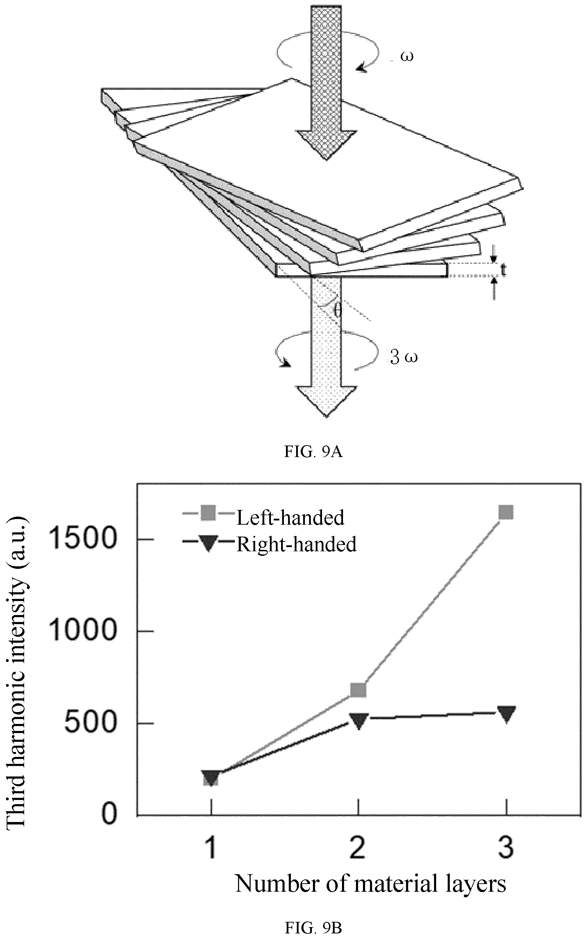

FIG. 9A shows a nonlinear optical crystal structure capable of realizing third-harmonic phase matching according to some embodiments, which has a continuous twist-stacking structure, where each material layer has the same thickness t, and the twist angle $\theta$ between adjacent layers is the same, which is $\frac{1}{4}\Delta k \cdot t$. In this embodiment, each material layer is made of calcium fluoride, which is a 4-fold rotation symmetric material. According to Table 1, the handedness of the output circularly polarized light is opposite to that of the incident circularly polarized light, and the introduced geometric phase is $4\theta$.

FIG. 9B shows the dependence of the third-harmonic intensity on the number of material layers when left-handed and right-handed circularly polarized lights are incident on the nonlinear optical crystal structure in the embodiment shown in FIG. 9A. It can be seen from FIG. 3B that under left-handed circularly polarized light excitation, as the number of material layers increases, the third-harmonic intensity increases approximately quadratically, achieving third-harmonic phase matching.

Based on the material types of the material layer in the nonlinear optical crystal structure and the types of modulated light, in some embodiments, the wavevector mismatch $\Delta k$ is in a range from $10^3\,m^{-1}$ to $10^9\,m^{-1}$. For example, the nonlinear optical crystal structure of the present application is suitable for modulate light in a wavelength range from 200 nm to 20 $\mu$m, but is not limited thereto.

For example, the second-order nonlinear optical coefficient of the two-dimensional optical crystal layer can be greater than or equal to 0.01 pm/V. In this case, relatively high second-order nonlinear light output efficiency can be achieved. However, the present application is not limited thereto.

The above-mentioned nonlinear optical crystal structure involves a stack of rotationally symmetric crystals, and achieves nonlinear enhancement of second-harmonic generation and even higher-order harmonic generation by controlling the twist angle between the material layers. The above-mentioned nonlinear optical crystal structure takes the advantages that the material layers have richer degrees of freedom (e.g., twist angles for stacking and types of stacking materials) and finer control means (atomic-level longitudinal stacking precision). Thus, the preparation process is refined, with higher control freedom and processing precision, making the crystal structure more sensitive to light modulation. Compared with conventional nonlinear metasurface solutions, the present solution can achieve higher precision (on the nanometer scale), higher operability, and higher efficiency.

The above solution can be applied to various material systems, including both non-van der Waals materials and van der Waals materials, and is not only applicable to two-dimensional materials, but also to conventional optical crystal materials.

The present application further provides a method for preparing the nonlinear optical crystal structure as described in any one of the above embodiments, including the following step:
twist-stacking the plurality of material layers according to the conditions of the twist angle.

The present application also provides a nonlinear light modulation method, including modulating light by using the nonlinear optical crystal structure as described in any one of the above embodiments. Light is incident from a first main surface of the nonlinear optical crystal structure and is output from a second main surface, wherein the nonlinear optical crystal structure can be any one of the nonlinear optical crystal structures provided in the above-described embodiments of the present application. It should be noted that the nonlinear light modulation method of the present application can modulate light by using the nonlinear optical crystal structure of any one of the above-described embodiments to efficiently output nonlinear light. Therefore, the features of any one of the above-described embodiments can be incorporated into the nonlinear light modulation method, which is not described herein repeatedly.

Optionally, the incident light can be linearly polarized light, elliptically polarized light, or circularly polarized light, which is not limited thereto.

Optionally, the wavelength of the incident light can be in a range from 200 nm to 20 $\mu$m, specifically, for example, 200 nm, 300 nm, 400 nm, 500 nm, 600 nm, 700 nm, 800 nm, 900 nm, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, etc.

Optionally, the frequency of the incident light can be in a range from $9.4\times10^{13}$ rad/s to $9.4\times10^{15}$ rad/s, specifically, for example $9.5\times10^{13}$ rad/s, $1\times10^{14}$ rad/s, $3\times10^{14}$ rad/s, $6\times10^{14}$ rad/s, $8\times10^{14}$ rad/s, $1\times10^{15}$ rad/s, $2\times10^{15}$ rad/s, $3\times10^{15}$ rad/s, $4\times10^{15}$ rad/s, $5\times10^{15}$ rad/s, $6\times10^{15}$ rad/s, $7\times10^{15}$ rad/s, $8\times10^{15}$ rad/s, $9\times10^{15}$ rad/s, etc.

The present application also provides an optical device including the nonlinear optical crystal structure of any one of the above embodiments.

The optical device as described above includes, but is not limited to, an ultraviolet laser, a lidar, an optical chip, a polarization modulator, or the like.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

**Claims**

1. A nonlinear optical crystal structure, comprising a plurality of material layers stacked in a direction perpendicular to a two-dimensional plane thereof, wherein each of the material layers has a crystal structure with y-fold rotational symmetry, and has a predetermined lattice direction parallel to the two-dimensional plane, where y is an integer in a range from 1 to 20; adjacent material layers have a twist angle therebetween, the twist angle is not zero, and the twist angle is an angle between the predetermined lattice directions of the adjacent material layers.

2. The nonlinear optical crystal structure according to claim 1, wherein the quantity of the material layers is N, wherein the twist angle $\theta_m$ of an m-th material layer relative to a first material layer satisfies:

$$\frac{11}{20(p-1)}\Delta k\left(\sum_{n=1}^{m}t_n - \frac{1}{2}t_m - \frac{1}{2}t_1\right)\leq\theta_m\leq\frac{29}{20(p-1)}\Delta k\left(\sum_{n=1}^{m}t_n - \frac{1}{2}t_m - \frac{1}{2}t_1\right);$$

or

$$\frac{11}{20(p+1)}\Delta k\left(\sum_{n=1}^{m}t_n - \frac{1}{2}t_m - \frac{1}{2}t_1\right)\leq\theta_m\leq\frac{29}{20(p+1)}\Delta k\left(\sum_{n=1}^{m}t_n - \frac{1}{2}t_m - \frac{1}{2}t_1\right);$$

or

p is greater than y, and $p = 2b - 1 + ay$, where $1 \leq b < p$, b is an integer, a is an integer, $a \neq 0$, and

$$\frac{11}{20|p-2b+1|}\Delta k\left(\sum_{n=1}^{m}t_n - \frac{1}{2}t_m - \frac{1}{2}t_1\right)\leq\theta_m\leq\frac{29}{20|p-2b+1|}\Delta k\left(\sum_{n=1}^{m}t_n - \frac{1}{2}t_m - \frac{1}{2}t_1\right);$$

wherein the first material layer is any one of the material layers located on two outermost sides of the nonlinear optical crystal structure, the m-th material layer is adjacent to an (m-1)-th material layer, $t_n$ is a thickness of an n-th material layer, $t_m$ is a thickness of the m-th material layer, $t_1$ is a thickness of the first material layer, N, n, and m are all integers, N≥2, 1≤n≤N, 1 <m≤N, $\Delta k$ is a wavevector mismatch of nonlinear optical effect of the material layer, $\Delta k = \frac{2p\pi}{\lambda}\left(n(p\omega) - n(\omega)\right)$, where $\lambda$ is a wavelength of incident light, $\omega$ is in a range from $9.4\times10^{13}$ rad/s to $9.4\times10^{15}$ rad/s, $\lambda$ is in a range from 200 nm to 20 $\mu$m, p is a harmonic order, and p is an integer in a range from 2 to 2000.

3. The nonlinear optical crystal structure according to claim 2, wherein the twist angle $\theta_m$ of the m-th material layer relative to the first material layer satisfies:

$$\theta_m = \frac{1}{(p-1)}\Delta k\left(\sum_{n=1}^{m}t_n - \frac{1}{2}t_m - \frac{1}{2}t_1\right),$$

or

$$\theta_m = \frac{1}{(p+1)}\Delta k\left(\sum_{n=1}^{m}t_n - \frac{1}{2}t_m - \frac{1}{2}t_1\right),$$

or

$$\theta_m = \frac{1}{|p-2b+1|}\Delta k\left(\sum_{n=1}^{m}t_n - \frac{1}{2}t_m - \frac{1}{2}t_1\right).$$

4. The nonlinear optical crystal structure according to claim 2, wherein each of the material layers has a same thickness.

5. The nonlinear optical crystal structure according to claim 4, wherein each of the material layers has a thickness t, and the twist angle $\theta_m$ of the m-th material layer relative to the first material layer satisfies:

$$\frac{11(m-1)}{20(p-1)}\Delta k \cdot t \leq \theta_m \leq \frac{29(m-1)}{20(p-1)}\Delta k \cdot t,$$

or

$$\frac{11(m-1)}{20(p+1)}\Delta k \cdot t \leq \theta_m \leq \frac{29(m-1)}{20(p+1)}\Delta k \cdot t,$$

or

$$\frac{11(m-1)}{20|p-2b+1|}\Delta k \cdot t \leq \theta_m \leq \frac{29(m-1)}{20|p-2b+1|}\Delta k \cdot t.$$

6. The nonlinear optical crystal structure according to claim 4, wherein the twist angle $\theta_m$ of the m-th material layer relative to the first material layer satisfies:

$$\theta_m = \frac{(m-1)}{(p-1)}\Delta k \cdot t,$$

or

$$\theta_m = \frac{(m-1)}{(p+1)}\Delta k \cdot t,$$

or

$$\theta_m = \frac{(m-1)}{|p-2b+1|}\Delta k \cdot t.$$

7. The nonlinear optical crystal structure according to any one of claims 2 to 6, wherein a twist direction of the m-th material layer relative to the (m-1)-th material layer is same.

8. The nonlinear optical crystal structure according to any one of claims 1 to 6, wherein each twist angle has a same degree.

9. The nonlinear optical crystal structure according to any one of claims 1 to 6, wherein y of each of the material layers has a same value.

10. The nonlinear optical crystal structure according to any one of claims 1 to 6, wherein each of the material layers has a thickness equal to or greater than 5 nm.

11. The nonlinear optical crystal structure according to any one of claims 1 to 6, wherein the adjacent material layers are bonded by a van der Waals force.

12. The nonlinear optical crystal structure according to any one of claims 1 to 6, wherein y is 1, and a material of the material layers is selected from the group consisting of silver molybdate, rhenium disulfide, KP15, and combinations thereof.

13. The nonlinear optical crystal structure according to any one of claims 1 to 6, wherein y is 2, and a material of the material layers is selected from the group consisting of potassium dihydrogen phosphate, potassium titanyl phosphate, barium triborate, germanium arsenide, black phosphorus, germanium monoselenide, titanium trisulfide, and combinations thereof.

14. The nonlinear optical crystal structure according to any one of claims 1 to 6, wherein y is 3, and a material of the material layers is selected from the group consisting of $3R\text{-}MoS_2$, BBO, rhombohedral boron nitride, gallium selenide, KBBF, and combinations thereof.

15. The nonlinear optical crystal structure according to any one of claims 1 to 6, wherein y is 4, and a material of the material layers is selected from the group consisting of perovskite, calcium chloride, sodium chloride, calcium fluoride, magnesium fluoride, and combinations thereof.

16. The nonlinear optical crystal structure according to any one of claims 1 to 6, wherein y is 6, and a material of the material layers is selected from the group consisting of hexagonal boron nitride, graphene, and a combination thereof.

17. The nonlinear optical crystal structure according to any one of claims 1 to 6, wherein y is an integer selected from 5 and 7 to 20, and a material of the material layers is a quasicrystal.

18. A method for preparing a nonlinear optical crystal structure according to any one of claims 1 to 17, comprising a following step:
    twist-stacking the plurality of material layers according to arrangement conditions of the twist angle.

19. An optical device comprising the nonlinear optical crystal structure according to any one of claims 1 to 17.

FIG. 1A

FIG. 1B

FIG. 2A

FIG. 2B

FIG. 3A

FIG. 3B

FIG. 4

FIG. 5A

FIG. 5B

FIG. 6A

FIG. 6B

FIG. 7

FIG. 8A

FIG. 8B

FIG. 9A

FIG. 9B

## INTERNATIONAL SEARCH REPORT

International application No.

**PCT/CN2025/071291**

### A. CLASSIFICATION OF SUBJECT MATTER

G02F 1/35(2006.01)i

According to International Patent Classification (IPC) or to both national classification and IPC

### B. FIELDS SEARCHED

Minimum documentation searched (classification system followed by classification symbols)

IPC:G02F

Documentation searched other than minimum documentation to the extent that such documents are included in the fields searched

Electronic data base consulted during the international search (name of data base and, where practicable, search terms used)

CNTXT, ENTXTC, DWPI, CNKI, WEB OF SCIENCE: 旋转对称, 偏转角, 堆叠角, 偏移角, 扭转角, 几何相位, 堆叠, 堆垛, 范德华, 范德瓦尔, 非线性, 晶体, 晶格, 方向, 轴向, 朝向, 角, 二次谐波, noline+, crystal+, stack+, orient+, angle, second w harmon+

### C. DOCUMENTS CONSIDERED TO BE RELEVANT

| Category* | Citation of document, with indication, where appropriate, of the relevant passages | Relevant to claim No. |
|---|---|---|
| PX | CN 118068628 A (PEKING UNIVERSITY) 24 May 2024 (2024-05-24) description, paragraphs [0059]-[0110], claims 1, 7, 12, and 16, and figure 1 | 1, 8-11, 16, 18, 19 |
| X | XU, Weiting et al. "Second Harmonic Generation from Artificially Stacked Transition Metal Dichalcogenide Twisted Bilayers" *ACS Nano*, Vol. 8, No. 3, 25 February 2014 (2014-02-25), ISSN: 1936-0851, pages 2951-2958 | 1, 8-19 |
| A | CN 108107498 A (INSTITUTE OF OPTICS AND ELECTRONICS, CHINESE ACADEMY OF SCIENCES) 01 June 2018 (2018-06-01) entire document | 1-19 |
| A | CN 113178766 A (HEFEI INSTITUTES OF PHYSICAL SCIENCE, CHINESE ACADEMY OF SCIENCES) 27 July 2021 (2021-07-27) entire document | 1-19 |
| A | US 2010110534 A1 (NIKON CORP. et al.) 06 May 2010 (2010-05-06) entire document | 1-19 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 March 2025** | **20 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/071291** |

**C.  DOCUMENTS CONSIDERED TO BE RELEVANT**

| Category* | Citation of document, with indication, where appropriate, of the relevant passages | Relevant to claim No. |
| --- | --- | --- |
| A | US 2024036434 A1 (THE TRUSTEES OF COLUMBIA UNIVERSITY IN THE CITY OF NEW YORK) 01 February 2024 (2024-02-01) <br> entire document | 1-19 |
| A | WO 03029894 A2 (QINETIQ LIMITED) 10 April 2003 (2003-04-10) <br> entire document | 1-19 |

Form PCT/ISA/210 (second sheet) (July 2022)

**INTERNATIONAL SEARCH REPORT**
**Information on patent family members**

International application No.

**PCT/CN2025/071291**

| Patent document cited in search report | | | Publication date (day/month/year) | Patent family member(s) | | | Publication date (day/month/year) |
|---|---|---|---|---|---|---|---|
| CN | 118068628 | A | 24 May 2024 | WO | 2024108889 | A1 | 30 May 2024 |
| | | | | US | 2025060650 | A1 | 20 February 2025 |
| CN | 108107498 | A | 01 June 2018 | CN | 108107498 | B | 31 December 2019 |
| CN | 113178766 | A | 27 July 2021 | CN | 113178766 | B | 09 August 2022 |
| US | 2010110534 | A1 | 06 May 2010 | EP | 2634625 | A1 | 04 September 2013 |
| | | | | US | 8264766 | B2 | 11 September 2012 |
| | | | | EP | 2634624 | A1 | 04 September 2013 |
| | | | | KR | 20120083528 | A | 25 July 2012 |
| | | | | KR | 101299877 | B1 | 23 August 2013 |
| | | | | JP | 2013231988 | A | 14 November 2013 |
| | | | | JP | 5729618 | B2 | 03 June 2015 |
| | | | | KR | 20100017108 | A | 16 February 2010 |
| | | | | KR | 101180505 | B1 | 06 September 2012 |
| | | | | US | 2012307350 | A1 | 06 December 2012 |
| | | | | US | 8422120 | B2 | 16 April 2013 |
| | | | | EP | 2148241 | A1 | 27 January 2010 |
| | | | | JPWO | 2008133178 | A1 | 22 July 2010 |
| | | | | JP | 5354501 | B2 | 27 November 2013 |
| | | | | WO | 2008133178 | A1 | 06 November 2008 |
| US | 2024036434 | A1 | 01 February 2024 | | None | | |
| WO | 03029894 | A2 | 10 April 2003 | JP | 2005504361 | A | 10 February 2005 |
| | | | | EP | 1433023 | A2 | 30 June 2004 |
| | | | | GB | 0123740 | D0 | 21 November 2001 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410205079